# EUROPEAN PATENT APPLICATION

(11) **EP 3 985 045 A1**
(43) Date of publication of application: **20.04.2022**
(21) Application number: 20822680.3
(22) Date of filing: 11.06.2020
(51) Int. Cl.: C08G 59/20, C08G 59/50, C08J 5/24

(54) **EPOXY RESIN COMPOSITION, CURED PRODUCT, FIBER-REINFORCED COMPOSITE MATERIAL, PREPREG, AND TOW PREPREG**

(30) Priority: 14.06.2019 JP 2019111142
(71) Applicant: DIC Corporation, Tokyo 174-8520 (JP)
(72) Inventor: KOBAYASHI Atsuko, Ichihara-shi, Chiba 290-8585 (JP); MATSUI Shigeki, Ichihara-shi, Chiba 290-8585 (JP); KIMURA Makoto, Ichihara-shi, Chiba 290-8585 (JP)
(74) Representative: TBK
(86) International application number: PCT/JP2020/022950
(87) International publication number: WO 2020/250957

(57) **Abstract**

The present invention provides an epoxy resin composition containing an epoxy resin (A) having a viscosity at 25°C of 1000 mPa·s or less, an epoxy resin (B) having at least two epoxy groups that is other than the epoxy resin (A), a core-shell rubber particle (C), and an amine curing agent (D). The content of the epoxy resin (A) is in the range of 0.5 to 15 mass% relative to the total mass of (A), (B), (C), and (D), and the content of the core-shell rubber particle (C) is in the range of 1 to 10 mass% relative to the total mass of (A), (B), (C), and (D). This epoxy resin composition has low viscosity and good impregnation property into fibers and is capable of forming into a cured product having high heat resistance, high mechanical properties, and high water absorption resistance.

## Description

### Technical Field

The present invention relates to an epoxy resin composition having low viscosity and good impregnation property into fibers and capable of forming into a cured product having high heat resistance, high mechanical properties, and high water absorption resistance, a cured product, a fiber-reinforced composite material, a prepreg, and a tow prepreg.

### Background Art

Fiber-reinforced resin formed products reinforced with reinforcing fibers have recently attracted attention as being lightweight and also having high mechanical strength, and have been increasingly used in various structure applications including bodies and various members of automobiles, aircraft, ships, and the like. The fiber-reinforced resin formed products can be produced by forming a fiber-reinforced composite material by a forming method such as a filament winding method, a press forming method, a hand lay-up method, a pultrusion method, or an RTM method.

The fiber-reinforced composite material is obtained by impregnating reinforcing fibers with a resin. The resin used for the fiber-reinforced composite material is required to have stability at normal temperature and have durability and strength when cured, and thus thermosetting resins such as unsaturated polyester resins, vinyl ester resins, and epoxy resins are commonly used. Of these, epoxy resins, which have high strength, high elasticity, and high heat resistance, are being put to practical use in various applications as resins for fiber-reinforced composite materials.

An epoxy resin composition for the fiber-reinforced composite material is required to have low viscosity because the fiber-reinforced composite material is used in the state where reinforcing fibers are impregnated with a resin as described above. In the case of use as a fiber-reinforced resin formed product for an engine-related structural component or an electric wire core material in an automobile or the like, a resin that has high heat resistance and high mechanical strength when cured is required so that the fiber-reinforced resin formed product can withstand a severe use environment for a long period of time.

As the epoxy resin composition, for example, an epoxy resin composition containing a bisphenol epoxy resin, an acid anhydride, and an imidazole compound is widely known (see, for example, PTL 1). An epoxy resin composition obtained by combining a glycidyl ether of a dihydric phenol and a glycidylamine epoxy resin with a curing agent is also known (see, for example, PTL 2). The epoxy resin compositions provided in PTLs 1 and 2 have high impregnation property into reinforcing fibers and exhibit certain levels of performance in terms of heat resistance and mechanical strength of cured products, but do not satisfy performance requirements that will become higher and higher in the future.

Thus, there has been a demand for an epoxy resin composition having low viscosity and good impregnation property into fibers and capable of forming into a cured product having higher heat resistance and higher mechanical properties.

### Citation List

### Patent Literature

PTL 1: Japanese Unexamined Patent Application Publication No. 2010-163573
PTL 2: International Publication No. 2016/148175

### Summary of Invention

### Technical Problem

Thus, an object of the present invention is to provide an epoxy resin composition having low viscosity and good impregnation property into fibers and capable of forming into a cured product having high heat resistance, high mechanical properties, and high water absorption resistance, a cured product, a fiber-reinforced composite material, a prepreg, and a tow prepreg.

### Solution to Problem

To achieve the above object, the present inventors have intensively studied and found that the above object can be achieved by using an epoxy resin composition containing an epoxy resin having a specific viscosity, an epoxy resin having at least two epoxy groups, a specific amount of core-shell rubber particle, and an amine curing agent, thereby completing the present invention.

Thus, the present invention relates to an epoxy resin composition containing an epoxy resin (A) having a viscosity at 25°C of 1000 mPa·s or less, an epoxy resin (B) having at least two epoxy groups that is other than the epoxy resin (A), a core-shell rubber particle (C), and an amine curing agent (D), a cured product of the epoxy resin composition, and a fiber-reinforced composite material, a prepreg, and a tow prepreg obtained using the epoxy resin composition. In the epoxy resin composition, the content of the epoxy resin (A) is in the range of 0.5 to 15 mass% relative to the total mass of the epoxy resin (A), the epoxy resin (B), the core-shell rubber particle (C), and the amine curing agent (D), and the content of the core-shell rubber particle (C) is in the range of 1 to 10 mass% relative to the total mass of the epoxy resin (A), the epoxy resin (B), the core-shell rubber particle (C), and the amine curing agent (D).

### Advantageous Effects of Invention

The epoxy resin composition of the present invention has low viscosity and good impregnation property into fibers and provides a cured product having high heat resistance, high mechanical properties, and high water absorption resistance, and thus is suitable for use in a fiber-reinforced composite material, a prepreg, a tow prepreg, and the like. As used herein, the phrase "high mechanical properties" refers to high strength, high elasticity, and high fracture toughness.

### Description of Embodiments

An epoxy resin composition of the present invention contains an epoxy resin (A) having a viscosity at 25°C of 1000 mPa·s or less (hereinafter abbreviated as an "epoxy resin (A)"), an epoxy resin (B) having at least two epoxy groups that is other than the epoxy resin (A) (hereinafter abbreviated as an "epoxy resin (B)"), a core-shell rubber particle (C), and an amine curing agent (D).

The epoxy resin (A) for use has a viscosity at 25°C of 1000 mPa·s or less. The viscosity in the present invention is a value determined using an E-type viscometer.

Examples of the epoxy resin (A) include glycidyl ether epoxy resins, glycidyl ester epoxy resins, glycidylamine epoxy resins, and alicyclic epoxy resins. These epoxy resins may be used alone or in combination of two or more.

Examples of the glycidyl ether epoxy resins include glycerol glycidyl ether epoxy resins, butyl glycidyl ether epoxy resins, phenyl glycidyl ether epoxy resins, (poly)ethylene glycol diglycidyl ether epoxy resins, (poly)propylene glycol diglycidyl ether epoxy resins, neopentyl glycol diglycidyl ether epoxy resins, 1,4-butanediol diglycidyl ether epoxy resins, 1,6-hexanediol diglycidyl ether epoxy resins, trimethylolpropane polyglycidyl ether epoxy resins, diglycerol polyglycidyl ether epoxy resins, allyl glycidyl ether epoxy resins, 2-ethylhexyl glycidyl ether epoxy resins, phenol pentaethylene glycol glycidyl ether epoxy resins, p-(tert-butyl)phenyl glycidyl ether epoxy resins, dodecyl glycidyl ether epoxy resins, and tridecyl glycidyl ether epoxy resins. These glycidyl ether epoxy resins may be used alone or in combination of two or more.

Examples of the glycidyl ester epoxy resins include hexahydrophthalic anhydride diglycidyl ester epoxy resins, tetrahydrophthalic anhydride diglycidyl ester epoxy resins, tertiary fatty acid monoglycidyl ester epoxy resins, o-phthalic acid diglycidyl ester epoxy resins, and dimer acid glycidyl ester epoxy resins. These glycidyl ester epoxy resins may be used alone or in combination of two or more.

Examples of the glycidylamine epoxy resins include m-(glycidoxyphenyl)diglycidylamine epoxy resins, N,N-diglycidylaminobenzene epoxy resins, and o-(N,N-diglycidylamino)toluene epoxy resins. These glycidylamine epoxy resins may be used alone or in combination of two or more.

Examples of the alicyclic epoxy resins include alicyclic diepoxy adipate epoxy resins, 3,4-epoxycyclohexylmethyl carboxylate epoxy resins, vinylcyclohexene dioxide epoxy resins, and hydrogenated bisphenol A diglycidyl ether epoxy resins.

These epoxy resins (A) may be used alone or in combination of two or more. Of these, those having a linear aliphatic structure with 2 to 6 carbon atoms are preferred because epoxy resin compositions having low viscosity and good impregnation property into fibers and capable of forming into cured products having high heat resistance and high mechanical properties can be obtained. Those having a hydrolyzable chlorine content in the range of 30 to 1500 ppm are preferred, and those having a hydrolyzable chlorine content in the range of 30 to 500 ppm are more preferred. In the present invention, the hydrolyzable chlorine content is a value obtained as follows: an epoxy resin is dissolved in dioxane; a 0.1 mol/L solution of potassium hydroxide in ethanol is added, and the resulting mixture is allowed to react under reflux in a hot water bath at 100°C for 15 minutes; the amount of liberated halogen is measured with a 0.01 N silver nitrate solution by using a potentiometric titrator under acidic conditions of acetic acid; and the measured value is divided by the sample weight.

The content of the epoxy resin (A) is in the range of 0.5 to 15 mass% relative to the total mass of the epoxy resin (A), the epoxy resin (B), the core-shell rubber particle (C), and the amine curing agent (D), preferably in the range of 1.0 to 8.0 mass%, because an epoxy resin composition having low viscosity and good impregnation property into fibers and capable of forming into a cured product having high heat resistance and high mechanical properties can be obtained.

The epoxy resin (B) may be any epoxy resin having at least two epoxy groups, and examples include bisphenol epoxy resins, novolac epoxy resins, dicyclopentadiene epoxy resins, rubber-modified epoxy resins, naphthalene epoxy resins, oxazolidone epoxy resins, triphenolmethane epoxy resins, tetraphenylethane epoxy resins, aliphatic epoxy resins, biphenyl epoxy resins, phenol aralkyl epoxy resins, and phosphorus-containing epoxy resins. These epoxy resins may be used alone or in combination of two or more.

Examples of the bisphenol epoxy resins include bisphenol A epoxy resins, bisphenol F epoxy resins, and bisphenol S epoxy resins.

Examples of the biphenyl epoxy resins include tetramethylbiphenyl epoxy resins.

Examples of the novolac epoxy resins include phenol novolac epoxy resins, cresol novolac epoxy resins, bisphenol A novolac epoxy resins, epoxidized compounds of condensates of phenols and aromatic aldehydes having phenolic hydroxyl groups, and biphenyl novolac epoxy resins.

Examples of the triphenylmethane epoxy resins include those having a structural moiety represented by structural formula (1) below as a repeating structural unit. 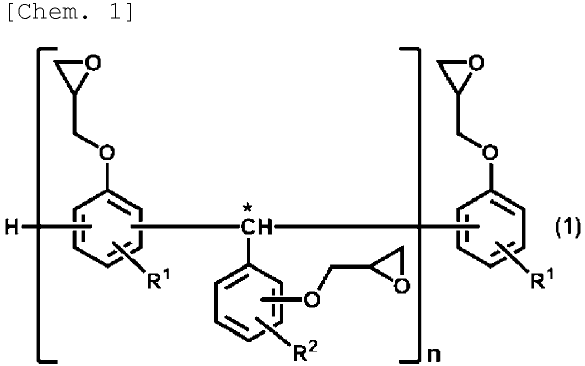 [In the formula, R¹ and R² are each independently a hydrogen atom or a binding site that connects to another structural moiety represented by structural formula (1) via the methine group marked by *. n is an integer of 1 or more.]

Examples of the aliphatic epoxy resins include glycidyl ether compounds of various aliphatic polyol compounds. A single aliphatic epoxy resin may be used alone, or two or more aliphatic epoxy resins may be used in combination. Examples of the aliphatic polyol compounds include aliphatic diol compounds such as ethylene glycol, propylene glycol, 1,3-propanediol, 2-methyl propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl 1,5-pentanediol, neopentyl glycol, 1,6-hexanediol, 1,4-bis(hydroxymethyl)cyclohexane, and 2,2,4-trimethyl-1,3-pentanediol; and trifunctional or higher functional aliphatic polyol compounds such as trimethylolethane, trimethylolpropane, glycerol, hexanetriol, pentaerythritol, ditrimethylolpropane, and dipentaerythritol.

Examples of the epoxy resins having a naphthalene skeleton in their molecular structure include naphthol novolac epoxy resins, naphthol aralkyl epoxy resins, naphthol-phenol co-condensed novolac epoxy resins, naphthol-cresol co-condensed novolac epoxy resins, diglycidyloxynaphthalene, and 1,1-bis(2,7-diglycidyloxy-1-naphthyl)alkanes.

As the epoxy resin having an oxazolidone ring, a wide variety of epoxy resins can be used as long as having an oxazolidone ring structure in their molecule, and their specific structure, production method, etc. are not particularly limited. Examples include reaction products obtained by using, as essential reactants, polyisocyanate compounds and epoxy resins that are polyglycidyl ether compounds of various phenolic hydroxyl-containing compounds. Examples of the phenolic hydroxyl-containing compounds include bisphenols, hydrogenated bisphenols, biphenols, hydrogenated biphenols, polyphenylene ether diols, polynaphthylene ether diols, phenol novolac resins, cresol novolac resins, bisphenol novolac resins, naphthol novolac resins, phenol aralkyl resins, naphthol aralkyl resins, and cyclic structure-containing phenol resins.

Examples of the polyisocyanate compounds include aliphatic polyisocyanate compounds such as butane diisocyanate, hexamethylene diisocyanate, 2,2,4-trimethylhexamethylene diisocyanate, and 2,4,4-trimethylhexamethylene diisocyanate; alicyclic polyisocyanate compounds such as norbornane diisocyanate, isophorone diisocyanate, hydrogenated xylylene diisocyanate, and hydrogenated diphenylmethane diisocyanate; aromatic polyisocyanate compounds such as tolylene diisocyanate, xylylene diisocyanate, tetramethylxylylene diisocyanate, diphenylmethane diisocyanate, 1,5-naphthalene diisocyanate, 4,4'-diisocyanato-3,3'-dimethylbiphenyl, and o-tolidine diisocyanate; polymethylene polyphenyl polyisocyanates having a repeating structure represented by structural formula (1) below; and isocyanurate-modified products, biuret-modified products, and allophanate-modified products thereof. These polyisocyanate compounds may be used alone or in combination of two or more. 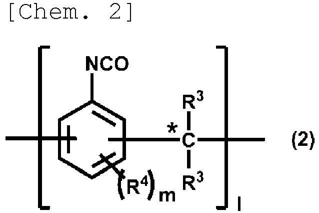 [In the formula, R³ at each occurrence is a hydrogen atom or a hydrocarbon group having 1 to 6 carbon atoms. R⁴ at each occurrence is an alkyl group having 1 to 4 carbon atoms or a binding site that connects to another structural moiety represented by structural formula (2) via the methylene group marked by *. m is 0 or an integer of 1 to 3, and 1 is an integer of 1 or more.]

Examples of the rubber-modified epoxy resins include polybutadiene rubber-modified epoxy resins, CTBN-modified (butadiene-acrylonitrile copolymer rubber-modified) epoxy resins, isoprene skeleton-containing epoxy resins, and glycidyl-containing acrylic resins.

Of these, bisphenol epoxy resins, novolac epoxy resins, dicyclopentadiene epoxy resins, CTBN-modified epoxy resins, naphthalene epoxy resins, oxazolidone epoxy resins, and triphenolmethane epoxy resins are preferred, and dicyclopentadiene epoxy resins having an average functionality in the range of 2.3 to 3.6 are more preferred, because an epoxy resin composition capable of forming into a cured product having high heat resistance and high mechanical properties can be obtained.

The content of the epoxy resin (B) is preferably in the range of 25 to 90 mass% relative to the total mass of the epoxy resin (A), the epoxy resin (B), the core-shell rubber particle (C), and the amine curing agent (D), more preferably in the range of 50 to 90 mass%.

The mass ratio [(A)/(B)] of the epoxy resin (A) to the epoxy resin (B) is preferably in the range of 0.01 to 0.3, more preferably in the range of 0.01 to 0.1, because an epoxy resin composition capable of forming into a cured product having high heat resistance, high mechanical properties, and high water absorption resistance can be obtained.

The core-shell rubber particle (C) refers to a rubber particle obtained by partially or entirely covering the surface of a particulate core component composed mainly of a crosslinked rubber-like polymer with a shell component by graft-polymerizing a polymer different from the core component on the particulate core component surface.

Examples of the core component include crosslinked rubber particles. The crosslinked rubber particles may be formed of any type of rubber, and examples include butadiene rubber, acrylic rubber, silicone rubber, butyl rubber, nitrile rubber, styrene rubber, synthetic natural rubber, and ethylene propylene rubber.

Examples of the shell component include polymers obtained by polymerization of one or more monomers selected from the group consisting of acrylic acid esters, methacrylic acid esters, and aromatic vinyl compounds. Preferably, the shell component is graft-polymerized to the core component and chemically bonded to the polymer constituting the core component. When a crosslinked rubber-like polymer composed of a polymer of styrene and butadiene is used as the core component, a polymer of methyl methacrylate, which is a methacrylic acid ester, and styrene, which is an aromatic vinyl compound, is preferably used as the shell component.

Examples of commercially available products of the core-shell rubber particle (C) include "PARALOID (registered trademark) "EXL-2655 (manufactured by Kureha Chemical Industry Co., Ltd.) made of a butadiene-alkyl methacrylate-styrene copolymer, "STAPHYLOID (registered trademark)" AC-3355, TR-2122 (manufactured by Takeda Pharmaceutical Company Limited) made of an acrylate-methacrylate copolymer, "PARALOID (registered trademark)" EXL-2611, EXL-3387 (manufactured by Rohm & Haas) made of a butyl acrylate-methyl methacrylate copolymer, and "KaneAce (registered trademark)" MX series (manufactured by Kaneka Corporation).

The content of the core-shell rubber particle (C) is in the range of 1 to 10 mass%, preferably in the range of 3 to 10 mass%, relative to the total mass of the epoxy resin (A), the epoxy resin (B), the core-shell rubber particle (C), and the amine curing agent (D), because an epoxy resin composition having low viscosity and good impregnation property into fibers and capable of forming into a cured product having high heat resistance and high mechanical properties can be obtained.

The volume-average particle size of the core-shell rubber particle (C) is preferably in the range of 50 to 500 nm, more preferably in the range of 50 to 300 nm, because an epoxy resin composition having low viscosity and good impregnation property into fibers and capable of forming into a cured product having high heat resistance and high mechanical properties can be obtained.

Examples of the amine curing agent (D) include amine compounds having a primary amine in their molecule, such as ethylenediamine, 1,2-diaminopropane, 1,3-diaminopropane, 1,4-diaminobutane, 1,5-diaminopentane, diethylenetriamine, dipropylenetriamine, triethylenetetramine, tripropylenetetramine, tetraethylenepentamine, hexamethylenediamine, iminobispropylamine, bis(hexamethylene)triamine, 1,3,6-trisaminomethylhexane, trimethylhexamethylenediamine, polyether diamine, diethylaminopropylamine, dimer acid esters of polyethyleneimine, dicyandiamide, tetramethylguanidine, adipic acid hydrazide, menthenediamine, 1,4-cyclohexanediamine, isophoronediamine, bis(aminomethyl)norbornane, bis(4-aminocyclohexyl)methane, N-aminoethylpiperazine, diaminodicyclohexylmethane, bisaminomethylcyclohexane, 3,9-bis(3-aminopropyl)-2,4,8,10-tetraoxaspiro(5.5)undecane, norbornenediamine, 4,4'-diaminodiphenylmethane, 4,4'-diaminodiphenylsulfone, 3,3'-diaminodiphenylsulfone, m-phenylenediamine, m-xylylenediamine, diethyltoluenediamine, and diaminodiethyldiphenylmethane; chain polyamine compounds such as 1,2-propanediamine and 1,3-butanediamine; and amine compounds having a secondary amine in their molecule, such as N-methylpiperazine, morpholine, piperidine, N-methylaniline, N-ethylaniline, N-ethyltoluidine, diphenylamine, hydroxyphenylglycine, and N-methylaminophenol sulfate. These amine curing agents may be used alone or in combination of two or more. Of these, dicyandiamide is preferred for reasons of pot life, heat resistance, and mechanical strength.

The active hydrogen equivalent ratio of the amine curing agent (D) is preferably in the range of 0.25 to 0.7 relative to the total epoxy equivalent of the epoxy resin (A) and the epoxy resin (B) because an epoxy resin composition having low viscosity and good impregnation property into fibers and capable of forming into a cured product having high heat resistance, high mechanical properties, and high water absorption resistance can be obtained.

The method for producing the epoxy resin composition of the present invention is not particularly limited, and the epoxy resin composition may be produced by any method. For example, the epoxy resin composition may be prepared by simultaneously kneading the epoxy resin (A), the epoxy resin (B), the core-shell rubber particle (C), and the amine curing agent (D) or by using a masterbatch prepared in advance by appropriately dispersing the core-shell rubber particle (C), the amine curing agent (D), and other additives in the epoxy resin (A) and the epoxy resin (B). In particular, to uniformly disperse the core-shell rubber particle (C) in the epoxy resin (A) and the epoxy resin (B), the epoxy resin composition is preferably prepared by preparing a masterbatch having a high concentration of the core-shell rubber particle (C) and then adding other components to the masterbatch. In the case where the temperature in the system may rise due to, for example, shear heating caused by kneading, it is preferable to take measures to prevent the temperature rise during the kneading, such as adjustment of the kneading speed or water cooling of a kneading pot.

In the kneading, it is preferable to use a kneading apparatus, and examples of the kneading apparatus include grinders, attritors, planetary mixers, dissolvers, triple rolls, kneaders, universal stirrers, homogenizers, homo-dispensers, ball mills, bead mills, extruders, heating rolls, kneaders, roller mixers, and Banbury mixers. These kneading apparatuses may be used alone or in combination of two or more.

The epoxy resin composition of the present invention may contain other resins other than the epoxy resin (A) and the epoxy resin (B), curing accelerators, flame retardants/flame retardant aids, fillers, additives, and the like as long as the advantageous effects of the present invention are not adversely affected.

Examples of the other resins include polycarbonate resins, polyphenylene ether resins, and curable resins and thermoplastic resins other than those described above.

Examples of the polycarbonate resins include polycondensates of dihydric or bifunctional phenols and carbonyl halides and polymers obtained by transesterification of dihydric or bifunctional phenols and carbonic acid diesters.

Examples of dihydric or bifunctional phenols which are raw materials of polycarbonate resins include 4,4'-dihydroxybiphenyl, bis(4-hydroxyphenyl)methane, 1,1-bis(4-hydroxyphenyl)ethane, 2,2-bis(4-hydroxyphenyl)propane, 2,2-bis(3-methyl-4-hydroxyphenyl)propane, 2,2-bis(3,5-dimethyl-4-hydroxyphenyl)propane, 1,1-bis(4-hydroxyphenyl)cyclohexane, bis(4-hydroxyphenyl)ether, bis(4-hydroxyphenyl)sulfide, bis(4-hydroxyphenyl)sulfone, bis(4-hydroxyphenyl)sulfoxide, bis(4-hydroxyphenyl)ketone, hydroquinone, resorcin, and catechol. Of these dihydric phenols, bis(hydroxyphenyl)alkanes are preferred, and, furthermore, those obtained using 2,2-bis(4-hydroxyphenyl)propane as a main raw material are particularly preferred.

Examples of carbonyl halides or carbonic acid diesters to be reacted with dihydric or bifunctional phenols include phosgene; diaryl carbonates such as dihaloformates of dihydric phenols, diphenyl carbonate, ditolyl carbonate, bis(chlorophenyl) carbonate, and m-cresyl carbonate; and aliphatic carbonate compounds such as dimethyl carbonate, diethyl carbonate, diisopropyl carbonate, dibutyl carbonate, diamyl carbonate, and dioctyl carbonate.

The molecular structure of the polymer chain of the polycarbonate resin may be a linear structure, or a linear structure with a branched structure. The branched structure can be introduced by using, for example, 1,1,1-tris(4-hydroxyphenyl)ethane, α,α',α"-tris(4-hydroxyphenyl)-1,3,5-triisopropylbenzene, phloroglucin, trimellitic acid, or isatin bis(o-cresol) as a raw material component.

Examples of the polyphenylene ether resins include poly(2,6-dimethyl-1,4-phenylene) ether, poly(2-methyl-6-ethyl-14-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, and poly(2-methyl-6-hydroxyethyl-1,4-phenylene) ether. Of these, poly(2,6-dimethyl-1,4-phenylene) ether is preferred.

The polyphenylene ether resin may include a 2-(dialkylaminomethyl)-6-methylphenylene ether unit, a 2-(N-alkyl-N-phenylaminomethyl)-6-methylphenylene ether unit, or the like as a partial structure.

Furthermore, as the polyphenylene ether resin, a modified polyphenylene ether resin having a resin structure in which a reactive functional group such as a carboxyl group, an epoxy group, an amino group, a mercapto group, a silyl group, a hydroxyl group, or a dicarboxylic anhydride group is introduced by a method such as graft reaction or copolymerization can also be used as long as the object of the present invention is not impaired.

Examples of the curable resins and thermoplastic resin other than those described above include, but are not limited to, polypropylene resins, polyethylene resins, polystyrene resins, syndiotactic polystyrene resins, ABS resins, AS resins, biodegradable resins, polyalkylene arylate resins such as polybutylene terephthalate, polyethylene terephthalate, polypropylene terephthalate, polytrimethylene terephthalate, and polyethylene naphthalate, unsaturated polyester resins, vinyl ester resins, diallyl phthalate resins, cyanate resins, xylene resins, triazine resins, urea resins, melamine resins, benzoguanamine resins, urethane resins, oxetane resins, ketone resins, alkyd resins, furan resins, styrylpyridine resins, silicone resins, and synthetic rubber. These resins may be used alone or in combination of two or more.

Examples of the curing accelerators include urea compounds such as 3-phenyl-1,1-dimethylurea, 3-(3,4-dichlorophenyl)-1,1-dimethylurea (DCMU), 3-(3-chloro-4-methylphenyl)-1,1-dimethylurea, 2,4-bis(3,3-dimethylureido)toluene, 1,1'-4(methyl-m-phenylene)bis(3,3-dimethylurea), and 4,4'-methylenebis(phenyldimethylurea), imidazole derivatives, phosphorus compounds, tertiary amines, metal salts of organic acids, Lewis acids, and amine complex salts. When dicyandiamide is used as the amine curing agent (D), it is preferable to use a urea compound as a curing accelerator.

Examples of the flame retardants/flame retardant aids include non-halogen flame retardants.

Examples of the non-halogen flame retardants include phosphorus flame retardants, nitrogen flame retardants, silicone flame retardants, inorganic flame retardants, and organometallic salt flame retardants. These flame retardants may be used alone or in combination of two or more.

The phosphorus flame retardants may be inorganic phosphorus flame retardants or organic phosphorus flame retardants. Examples of the inorganic phosphorus flame retardants include red phosphorus, ammonium phosphates such as monoammonium phosphate, diammonium phosphate, triammonium phosphate, and ammonium polyphosphate, and inorganic nitrogen-containing phosphorus compounds such as phosphoramide.

The red phosphorus is preferably subjected to surface treatment for the purpose of preventing hydrolysis or the like. Examples of methods of the surface treatment include (i) coating with an inorganic compound such as magnesium hydroxide, aluminum hydroxide, zinc hydroxide, titanium hydroxide, bismuth oxide, bismuth hydroxide, bismuth nitrate, or a mixture thereof, (ii) coating with a mixture of an inorganic compound such as magnesium hydroxide, aluminum hydroxide, zinc hydroxide, or titanium hydroxide and a thermosetting resin such as a phenol resin, and (iii) double coating with a thermosetting resin such as a phenol resin over a coating of an inorganic compound such as magnesium hydroxide, aluminum hydroxide, zinc hydroxide, or titanium hydroxide.

Examples of the organic phosphorus flame retardants include general-purpose organic phosphorus compounds such as phosphate compounds, phosphonic acid compounds, phosphinic acid compounds, phosphine oxide compounds, phosphorane compounds, and organic nitrogen-containing phosphorus compounds, and cyclic organic phosphorus compounds such as 9,10-dihydro-9-oxa-10-phosphaphenanthrene-10-oxide, 10-(2,5-dihydrooxyphenyl)-10H-9-oxa-10-phosphaphenanthrene-10-oxide, and 10-(2,7-dihydrooxynaphthyl)-10H-9-oxa-10-phosphaphenanthrene-10-oxide.

When the phosphorus flame retardants are used, the phosphorus flame retardants may each be used in combination with, for example, hydrotalcite, magnesium hydroxide, a boron compound, zirconium oxide, a black dye, calcium carbonate, zeolite, zinc molybdate, or activated carbon.

Examples of the nitrogen flame retardants include triazine compounds, cyanuric acid compounds, isocyanuric acid compounds, and phenothiazine. Of these, triazine compounds, cyanuric acid compounds, and isocyanuric acid compounds are preferred.

Examples of the triazine compounds include melamine, acetoguanamine, benzoguanamine, melon, melam, succinoguanamine, ethylene dimelamine, melamine polyphosphate, and triguanamine, and also include aminotriazine sulfate compounds such as guanylmelamine sulfate, melem sulfate, and melam sulfate, aminotriazine-modified phenol resins, and aminotriazine-modified phenol resins further modified with tung oil, isomerized linseed oil, or the like.

Specific examples of the cyanuric acid compounds include cyanuric acid and melamine cyanurate.

The amount of nitrogen flame retardant added is appropriately selected depending on the type of nitrogen flame retardant, the other components of the epoxy resin composition, and the desired degree of flame retardancy, and is preferably, for example, in the range of 0.05 mass% to 10 mass%, more preferably in the range of 0.1 mass% to 5 mass%, in the epoxy resin composition of the present invention.

When the nitrogen flame retardants are used, a metal hydroxide, a molybdenum compound, or the like may be used in combination.

For the silicone flame retardants, any silicon-containing organic compound can be used without any particular limitation, and examples include silicone oil, silicone rubber, and silicone resins.

The amount of silicone flame retardant added is appropriately selected depending on the type of silicone flame retardant, the other components of the epoxy resin composition, and the desired degree of flame retardancy, and is preferably, for example, in the range of 0.05 mass% to 20 mass% in the epoxy resin composition of the present invention. When the silicone flame retardants are used, a molybdenum compound, alumina, or the like may be used in combination.

Examples of the inorganic flame retardants include metal hydroxides, metal oxides, metal carbonate compounds, metal powder, boron compounds, and low-melting glass.

Examples of the metal hydroxides include aluminum hydroxide, magnesium hydroxide, dolomite, hydrotalcite, calcium hydroxide, barium hydroxide, and zirconium hydroxide.

Examples of the metal oxides include zinc molybdate, molybdenum trioxide, zinc stannate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide, and tungsten oxide.

Examples of the metal carbonate compounds include zinc carbonate, magnesium carbonate, calcium carbonate, barium carbonate, basic magnesium carbonate, aluminum carbonate, iron carbonate, cobalt carbonate, and titanium carbonate.

Examples of the metal powder include aluminum, iron, titanium, manganese, zinc, molybdenum, cobalt, bismuth, chromium, nickel, copper, tungsten, and tin.

Examples of the boron compounds include zinc borate, zinc metaborate, barium metaborate, boric acid, and borax.

Examples of the low-melting glass include CEEPREE (Bokusui Brown Co., Ltd.), hydrated glass SiO₂-MgO-H₂O, and glassy compounds such as PbO-B₂O₃, ZnO-P₂O₅-MgO, P₂O₅-B₂O₃-PbO-MgO, P-Sn-O-F, PbO-V₂O₅-TeO₂, Al₂O₃-H₂O, and lead borosilicate.

The amount of inorganic flame retardant added is appropriately selected depending on the type of inorganic flame retardant, the other components of the epoxy resin composition, and the desired degree of flame retardancy, and is preferably, for example, in the range of 0.05 mass% to 20 mass%, preferably in the range of 0.5 mass% to 15 mass%, in the epoxy resin composition of the present invention.

Examples of the organometallic salt flame retardants include ferrocene, metal acetylacetonate complexes, organometallic carbonyl compounds, organic cobalt salt compounds, organic metal sulfonates, and compounds formed by ionic or coordinate bonding between a metal atom and an aromatic compound or a heterocyclic compound.

The amount of organometallic salt flame retardant added is appropriately selected depending on the type of organometallic salt flame retardant, the other components of the epoxy resin composition, and the desired degree of flame retardancy, and is preferably, for example, in the range of 0.005 mass% to 10 mass% in the epoxy resin composition of the present invention.

Examples of the fillers include titanium oxide, glass beads, glass flakes, glass fiber, calcium carbonate, barium carbonate, calcium sulfate, barium sulfate, potassium titanate, aluminum borate, magnesium borate, fused silica, crystalline silica, alumina, silicon nitride, aluminum hydroxide, fibrous reinforcing agents such as kenaf fiber, carbon fiber, alumina fiber, and quartz fiber, and non-fibrous reinforcing agents. These fillers may be used alone or in combination of two or more. These fillers may be coated with organic matter, inorganic matter, or the like.

When glass fiber is used as a filler, it can be selected from, for example, rovings, which are of long fiber-type, and chopped strands and milled fibers, which are of short fiber-type. The glass fiber used is preferably surface-treated for a resin used. Adding a filler can further improve the strength of an uninflammable layer (or a carbonized layer) that forms at the time of burning, and makes the uninflammable layer (or carbonized layer) once formed at the time of burning less prone to breakage and exhibit stable heat insulating ability, thus producing a greater flame retardant effect and providing the materials with high rigidity.

Examples of the additives include plasticizers, antioxidants, ultraviolet absorbers, stabilizers such as light stabilizers, antistatic agents, conductivity-imparting agents, stress relaxing agents, release agents, crystallization accelerators, hydrolysis inhibitors, lubricants, impacting agents, slidability improvers, compatibilizers, nucleating agents, toughening agents, reinforcing agents, flow control agents, dyes, sensitizers, coloring pigments, rubbery polymers, thickeners, antisettling agents, anti-sagging agents, antifoaming agents, coupling agents, rust inhibitors, antibacterial and antifungal agents, antifouling agents, and electrically conductive polymers.

### • Cured product of epoxy resin composition

A cured product of the present invention is obtained by curing reaction of the epoxy resin composition. The cured product can be obtained in accordance with a common method for curing a curable resin composition. For example, the heating temperature conditions may be appropriately selected depending on the type of curing agent to be combined and the application. For example, the epoxy resin composition may be heated in a temperature range from room temperature to about 250°C. For the forming method, methods commonly used for curable resin compositions can be used, and conditions specific to the epoxy resin composition of the present invention are not particularly necessary.

For the cured product of the present invention to have high heat resistance and high mechanical properties and to be highly durable, the cured product preferably has a fracture toughness of 1.3 or more, a glass transition temperature (hereinafter abbreviated as "Tg") of 130°C or higher, and a tensile elastic modulus of 2 GPa or more.

### • Fiber-reinforced composite material

A fiber-reinforced composite material of the present invention refers to a material in a state where reinforcing fibers impregnated with the epoxy resin composition have yet to be cured. Here, the reinforcing fibers may be made of any of twisted yarn, untwisted yarn, and non-twisted yarn. Untwisted yarn and non-twisted yarn are preferred because they exhibit high formability in fiber-reinforced composite materials. Furthermore, the reinforcing fibers may be in the form of fibers aligned in one direction or a woven fabric. The woven fabric can be freely selected from plain weave fabrics, satin weave fabrics, and the like depending on where and for what purpose it is used. Specific examples include carbon fiber, glass fiber, aramid fiber, boron fiber, alumina fiber, and silicon carbide fiber, each having high mechanical strength and high durability, and these may be used alone or in combination of two or more. Of these, carbon fiber is particularly preferred because it provides formed products with good strength, and various types of carbon fibers, such as polyacrylonitrile-based carbon fiber, pitch-based carbon fiber, and rayon-based carbon fiber, can be used.

Examples of methods for obtaining the fiber-reinforced composite material from the epoxy resin composition of the present invention include, but are not limited to, a method in which components constituting the epoxy resin composition are uniformly mixed to produce varnish, and then unidirectional reinforcing fibers, which are reinforcing fibers aligned in one direction, are immersed in the varnish (the uncured state in a pultrusion method or a filament winding method) and a method in which a stack of woven fabrics of reinforcing fibers is put in a female mold, after which the female mold is hermetically sealed with a male mold, and then a resin is injected to cause pressure impregnation (the uncured state in an RTM method).

In the fiber-reinforced composite material of the present invention, the epoxy resin composition need not necessarily penetrate into the inside of a fiber bundle, and the epoxy resin composition may be localized in the vicinity of the surface of fibers.

Furthermore, in the fiber-reinforced composite material of the present invention, the volume fraction of the reinforcing fibers relative to the total volume of the fiber-reinforced composite material is preferably 40% to 85%, more preferably in the range of 50% to 70% in terms of strength. When the volume fraction is less than 40%, the content of the epoxy resin composition is excessively high, and thus a cured product with insufficient flame retardancy may be provided, or various properties required for fiber-reinforced composite materials excellent in specific modulus and specific strength may be unsatisfied. When the volume fraction is more than 85%, the adhesion between the reinforcing fibers and the epoxy resin composition may be low.

### • Prepreg

A prepreg of the present invention is, for example, a prepreg obtained by aligning continuous carbon fibers in one direction into sheet form, a prepreg obtained by impregnating a substrate made of carbon fiber such as carbon fiber fabric with the epoxy resin composition, a prepreg obtained by disposing a resin layer made of the epoxy resin composition of the present invention on at least one surface of a carbon fiber substrate, and a prepreg impregnated with some of the epoxy resin composition of the present invention and having the rest of the epoxy resin composition disposed on at least one surface.

Examples of methods for producing the prepreg include a wet method and a hot-melt method. The wet method is a method in which a reinforcing fiber substrate is immersed in a solution of an epoxy resin composition in a solvent and then withdrawn, and the solvent is evaporated by using an oven or the like. The hot-melt method is a method in which reinforcing fibers are impregnated directly with an epoxy resin composition whose viscosity has been reduced by heating, or a method in which an epoxy resin composition is once applied onto release paper, a film, or the like to form a thin film, then the thin film of the epoxy resin composition is stacked on both or one side of a layer formed of reinforcing fibers, and the stack is hot-pressed to thereby make the epoxy resin composition transfer and penetrate into the reinforcing fibers. Of these, the hot-melt method, which leaves substantially no solvent in the prepreg, is preferred.

The carbon fiber mass per unit area of the prepreg is preferably in the range of 70 to 1000 g/m² from the viewpoint of workability and draping properties of the prepreg. The carbon fiber content in the prepreg is preferably in the range of 30 to 90 mass%, more preferably in the range of 35 to 85 mass%, still more preferably in the range of 40 to 80 mass%, to achieve high mechanical properties and provide a uniform formed product.

### • Tow prepreg

A tow prepreg of the present invention is, for example, a narrow intermediate substrate obtained by impregnating a reinforcing fiber bundle formed of thousands to tens of thousands of reinforcing fiber filaments aligned in one direction with a matrix resin composition, and then winding the resultant around a bobbin such as a paper tube.

The tow prepreg can be processed into fiber-reinforced composite materials by various conventionally known methods. Examples include a wet method, a filament winding method, and a hot-melt method.

The wet method, similar to the "wet method" described as a method for producing the above-mentioned prepreg, is a method in which an epoxy resin composition for a tow prepreg is dissolved in an organic solvent such as methyl ethyl ketone or methanol so as to have reduced viscosity, a reinforcing fiber bundle is immersed in the solution while being impregnated, and then the organic solvent is evaporated by using an oven or the like to produce a tow prepreg.

The filament winding method is a method in which the viscosity of an epoxy resin composition for a tow prepreg is reduced by heating without using any organic solvent, and a reinforcing fiber bundle is immersed in the resultant while being impregnated.

The hot-melt method, similarly to the "hot-melt method" described as a method for producing the above-mentioned prepreg, is a method in which an epoxy resin composition whose viscosity has been reduced by heating is formed into a film on a roll or release paper, then transferred to one or both surfaces of a reinforcing fiber bundle, and then passed through a bending roll or a pressure roll to be pressed to cause impregnation.

In the tow prepreg of the present invention, the volume fraction (Vf) of the reinforcing fibers is preferably in the range of 50% to 75% from the viewpoint of strength and impregnation property, more preferably in the range of 53% to 72%.

The tow prepreg of the present invention can be formed into a hollow tubular fiber-reinforced composite material by being wound around a core at a predetermined angle with respect to the axis of the core by a tape winding method, and then heated and cured in an oven. In this case, heat-shrinkable tape may be wound on the surface of the material wound around the core at the time of curing. When heat-shrinkable tape is wound on the surface of the material wound around the core, the tape shrinks upon curing to exert pressure, thus providing a hollow tubular fiber-reinforced composite material with improved surface quality and less inner voids.

Furthermore, the tow prepreg of the present invention can also be formed into a fiber-reinforced composite material having a desired shape in such a manner that the tow prepreg is stacked on a rigid tool by a tape placement method and then sealed with a flexible film, after which the space between the rigid tool and the flexible film is evacuated by suction with a vacuum pump, and the stack is placed in an autoclave and then heated and pressed. Examples of materials of the rigid tool include metals such as steel and aluminum, fiber-reinforced plastics (FRP), wood, and gypsum, and examples of materials of the flexible film include nylon, fluorocarbon resins, and silicone resins.

Fiber-reinforced composite materials produced using the tow prepreg of the present invention have high impact resistance to external impact, and thus can be used in many fields such as aviation and space, automobiles, railroad vehicles, ships, civil engineering and construction, and sporting goods, and, particularly, can be suitably used for high-pressure vessels to be filled with hydrogen gas or the like as used in fuel cells.

### EXAMPLES

The present invention will now be described specifically with reference to Examples and Comparative Examples.

### (Examples 1 to 10: Preparation of epoxy resin compositions (1) to (10))

Components were blended according to the formulations shown in Table 1 and homogeneously mixed by stirring to obtain epoxy resin compositions (1) to (10).

### (Comparative Examples 1 to 6: Preparation of epoxy resin compositions (C1) to (C6))

Components were blended according to the formulations shown in Table 1 and homogeneously mixed by stirring to obtain epoxy resin compositions (C1) to (C6).

Using the epoxy resin compositions (1) to (10) and (C1) to (C6) obtained in Examples and Comparative Examples above, the following evaluations were conducted.

### [Method of evaluating mechanical properties]

The epoxy resin compositions obtained in Examples and Comparative Examples were each poured into a mold having a width of 80 mm, a length of 180 mm, and a thickness of 4 mm and thermally cured at 110°C for four hours to obtain cured products. The evaluation of mechanical strength was performed by measurement of tensile strength, tensile elastic modulus, elongation, and fracture toughness (K_{1c}).

### <Measurement of tensile strength, tensile elastic modulus, and elongation>

The tensile strength, tensile elastic modulus, and elongation of the cured products were measured in accordance with JIS K 7161 (2014).

### <Measurement of fracture toughness (K_{1c})>

The fracture toughness (K_{1c}) of the cured products was measured in accordance with ASTM D5045.

### [Method of evaluating heat resistance]

The epoxy resin compositions obtained in Examples and Comparative Examples were each poured into a mold having a width of 90 mm, a length of 110 mm, and a thickness of 2 mm and thermally cured at 110°C for four hours to obtain cured products. The cured products obtained were cut with a diamond cutter to a width of 5 mm and a length of 55 mm to prepare test pieces. Next, using "DMS6100" manufactured by SII NanoTechnology Inc., dynamic viscoelasticity was measured by dual-cantilever bending under the following conditions, and the temperature at maximum tanδ was evaluated as a glass transition temperature (Tg).

The dynamic viscoelasticity was measured under the following conditions: temperature; room temperature to 260°C, heating rate; 3°C/min, frequency; 1 Hz (sine wave), strain amplitude; 25 µm.

### [Method of evaluating water absorption resistance]

Water absorption resistance was evaluated by measurement of moisture absorption. The measurement of moisture absorption was performed as follows: test pieces were prepared in the same manner as in the method of evaluating heat resistance; the test pieces were each held at 70 hours under the conditions of 110°C and 100% RH using a pressure cooker tester; and the moisture absorption was determined based on the weight change before and after testing.

The composition and evaluation results of the epoxy resin compositions (1) to (10) prepared in Examples 1 to 10 and the epoxy resin compositions (C1) to (C6) prepared in Comparative Examples 1 to 6 are shown in Tables 1 and 2.

**[Table 1]**

| Table 1 | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Epoxy resin composition | | | (1) | (2) | (3) | (4) | (5) | (6) | (7) | (8) | (9) | (10) | (11) | (12) | (13) |
| Epoxy resin (A) | A-1 | Composition (parts by mass) | 4.4 | 4.2 | | 9.8 | | 4.4 | 8.5 | 1.5 | 4.4 | | | 4.4 | 4.5 |
| | A-2 | | | | | | | | | | | 4.4 | | | |
| | A-3 | | | | 1.5 | | | | | | | | | | |
| | A-4 | | | | | | 4.9 | | | | | | | | |
| | A-5 | | | | | | | | | | | | 4.4 | | |
| Epoxy resin (B) | B-1 | | 75.2 | 68.1 | 65.4 | 63.1 | 62.7 | 19.0 | 62.2 | 67.1 | 25.0 | 75.2 | 73.5 | 61.9 | 62.1 |
| | B-2 | | | | | | | 56.8 | | | | | | | |
| | B-3 | | | | | | | | | | | | | 14.9 | |
| | B-4 | | | | | | | | | 7.8 | | | | | |
| | B-5 | | | | | | | | | | | | | | 14.7 |
| | B-6 | | | | 17.8 | | 16.8 | | | 4.9 | | | | | |
| | B-7 | | | | | 6.5 | | | | | | | | | |
| | B-8 | | | | | | | | 10.7 | | | | | | |
| | B-9 | | | | | | | | | | 52.0 | | | | |
| Core-shell rubber particle | MX-154 | | 12.3 | 19.7 | 7.4 | 12.3 | 7.4 | 12.4 | 12.2 | 12.3 | 12.2 | 12.3 | 12.3 | 12.4 | 12.3 |
| Amine curing agent | DICY7 | | 7.2 | 7.0 | 6.8 | 7.3 | 7.0 | 6.4 | 4.4 | 4.4 | 4.4 | 7.2 | 9.0 | 4.4 | 4.4 |
| Curing accelerator | DCMU | | 1.0 | 1.0 | 1.0 | 1.0 | 1.0 | 1.0 | 2.0 | 2.0 | 2.0 | 1.0 | 1.0 | 2.0 | 2.0 |
| Blend viscosity (Pa·s) | | | 8.2 | 7.5 | 28 | 25 | 8.9 | 17 | 24 | 29 | 26 | 8.8 | 14.8 | 20.7 | 31.2 |
| DMATg (°C) Tanσ | | | 148 | 148 | 151 | 157 | 146 | 147 | 140 | 146 | 154 | 142 | 147 | 152 | 154 |
| Tensile strength (MPa) | | | 78 | 70 | 75 | 83 | 76 | 81 | 72 | 77 | 73 | 79 | 82 | 75 | 77 |
| Tensile elastic modulus (GPa) | | | 2.6 | 2.3 | 2.5 | 2.8 | 2.7 | 2.8 | 2.5 | 2.4 | 2.7 | 2.7 | 3.0 | 2.7 | 2.7 |
| Elongation (%) | | | 9.0 | 9.4 | 9.8 | 6.0 | 7.2 | 8.3 | 8.5 | 8.0 | 7.0 | 5.2 | 4.8 | 8.6 | 6.8 |
| K_{1c} (MPa·m^{1/2}) | | | 2.19 | 2.35 | 1.72 | 1.85 | 1.92 | 1.80 | 1.79 | 1.77 | 1.45 | 1.99 | 1.79 | 1.68 | 1.62 |
| Moisture absorption (%) | | | 9.5 | 8.1 | 6.0 | 9.3 | 7.8 | 7.1 | 6.3 | 5.5 | 7.0 | 8.5 | 9.8 | 6.2 | 5.7 |

**[Table 2]**

| Table 2 | | | Comparative Example 1 | Comparative Example 2 | Comparative Example 3 | Comparative Example 4 | Comparative Example 5 | Comparative Example 6 |
|---|---|---|---|---|---|---|---|---|
| Epoxy resin composition | | | (C1) | (C2) | (C3) | (C4) | (C5) | (C6) |
| Epoxy resin (A) | A-1 | Composition (parts by mass) | | 4.9 | 4.4 | 19.8 | | |
| | A-3 | | | | | | | 3.0 |
| | A-6 | | | | | | 5.0 | |
| Epoxy resin (B) | B-1 | | 91.7 | 86.5 | 37.9 | 59.1 | 86.6 | 88.7 |
| Core-shell rubber particle | MX-154 | | | | 50.6 | 12.2 | | |
| Amine curing agent | DICY7 | | 7.3 | 7.6 | 6.1 | 7.9 | 7.4 | 7.4 |
| Curing accelerator | DCMU | | 1.0 | 1.0 | 1.0 | 1.0 | 1.0 | 1.0 |
| Blend viscosity (Pa·s) | | | 12.3 | 4.28 | 14.63 | 0.7 | 7.2 | 6.8 |
| DMA Tg (°C) Tanσ | | | 151 | 149 | 146 | 119 | 151 | 151 |
| Tensile strength (MPa) | | | 91 | 95 | 50 | 69 | 95 | 94 |
| Tensile elastic modulus (GPa) | | | 2.9 | 3.2 | 1.7 | 2.6 | 3.0 | 3.0 |
| Elongation (%) | | | 8.4 | 5.7 | 13.5 | 13.9 | 8.4 | 8.6 |
| K_{1c} (MPa·m^{1/2}) | | | 0.84 | 0.85 | 3.33 | 3.51 | 0.80 | 0.88 |
| Moisture absorption (%) | | | 7.7 | 8.5 | 7.1 | 11.2 | 8.1 | 7.9 |

The abbreviations in Tables 1 and 2 are as described below.

### Epoxy resin (A);

"A-1": 1,4-Butanediol diglycidyl ether ("SR-14BL" manufactured by Sakamoto Yakuhin Kogyo Co., Ltd., epoxy equivalent; 110 g/equivalent, viscosity at 25°C; 12 mPa·s, hydrolyzable chlorine content; 80 ppm)

"A-2": 1,4-Butanediol diglycidyl ether ("DENACOL EX-214" manufactured by Nagase ChemteX Corporation, epoxy equivalent; 137 g/equivalent, viscosity at 25°C; 17.3 mPa·s, hydrolyzable chlorine content; 900 ppm)

"A-3": 1,6-Hexanediol diglycidyl ether ("SR-16H" manufactured by Sakamoto Yakuhin Kogyo Co., Ltd., epoxy equivalent; 160 g/equivalent, viscosity at 25°C; 25 mPa·s, hydrolyzable chlorine content; 430 ppm)

"A-4": Neopentyl glycol diglycidyl ether ("SR-NPG" manufactured by Sakamoto Yakuhin Kogyo Co., Ltd., epoxy equivalent; 145 g/equivalent, viscosity at 25°C; 17 mPa·s, hydrolyzable chlorine content; 350 ppm)

"A-5": 1,4-Butanediol diglycidyl ether produced in the following manner

A flask equipped with a stirrer, a dropping funnel, a condenser, a nitrogen inlet tube, and a thermometer was charged with 135.0 parts by mass of 1,4-butanediol and 4.4 parts by mass of tin tetrachloride heated to 30°C, and the temperature was raised to 80°C. Subsequently, 305.3 parts by mass of epichlorohydrin (1.1 equivalents per hydroxyl group of diol) was added dropwise. After stirring was performed for one hour while maintaining the temperature at 80°C to 85°C, the mixture was cooled to 45°C. A 22% aqueous sodium hydroxide solution in an amount of 654.6 parts by mass was added, and the mixture was heated to 45°C and stirred for three hours. After cooling to room temperature, the aqueous phase was separated and removed, and unreacted epichlorohydrin and water were removed by heating under reduced pressure to obtain 218.2 parts by mass (yield 72%) of 1,4-butanediol diglycidyl ether having a diglycidyl ether purity by GPC (n = 0) of 39%, an epoxy equivalent of 138 g/equivalent, a viscosity at 25°C of 16 mPa·s, and a hydrolyzable chlorine content of 1800 ppm.

"A-6": Trimethylolpropane triglycidyl ether ("DENACOL EX-321" manufactured by Nagase ChemteX Corporation, epoxy equivalent; 140 g/equivalent, viscosity at 25°C; 130 mPa·s, hydrolyzable chlorine content; 700 ppm)

### Epoxy resin (B);

"B-1": Bisphenol A epoxy resin ("EPICLON 840-S" manufactured by DIC Corporation, epoxy equivalent; 184 g/equivalent, average functionality; 2.0)

"B-2": Phenol novolac epoxy resin ("EPICLON N-730-A" manufactured by DIC Corporation, epoxy equivalent; 174 g/equivalent, average functionality; 2.6)

"B-3": Dicyclopentadiene epoxy resin ("EPICLON HP-7200L" manufactured by DIC Corporation, epoxy equivalent; 247 g/equivalent, average functionality; 2.2)

"B-4": Dicyclopentadiene epoxy resin ("EPICLON HP-7200" manufactured by DIC Corporation, epoxy equivalent; 260 g/equivalent, average functionality; 2.3)

"B-5": Dicyclopentadiene epoxy resin ("EPICLON HP-7200HHH" manufactured by DIC Corporation, epoxy equivalent; 285 g/equivalent, average functionality; 3.5)

"B-6": CTBN-modified epoxy resin ("EPICLON TSR-960" manufactured by DIC Corporation, epoxy equivalent; 235 g/equivalent, average functionality; 2.0)

"B-7": Naphthalene epoxy resin ("EPICLON HP-4770" manufactured by DIC Corporation, epoxy equivalent; 206 g/equivalent, average functionality; 2.6)

"B-8": Oxazolidone epoxy resin ("EPICLON TSR-400" manufactured by DIC Corporation, epoxy equivalent; 342 g/equivalent, average functionality; 2.0)

"B-9": Triphenylmethane epoxy resin ("EPICLON EXA-7250" manufactured by DIC Corporation, epoxy equivalent; 166 g/equivalent, average functionality; 2.6) [0130]

### Core-shell rubber particle;

"MX-154": Core-shell rubber particle (40%)/bisphenol A epoxy resin (60%) ("KaneAce MX-154" manufactured by Kaneka Corporation)

### Curing agent;

"DICY7": Dicyandiamide ("DICY7" manufactured by Mitsubishi Chemical Corporation)

### Curing accelerator;

"DCMU": 3-(3,4-Dichlorophenyl)-1,1-dimethylurea ("EPICLON B-605-IM" manufactured by DIC Corporation)

## Claims

1. An epoxy resin composition comprising:
an epoxy resin (A) having a viscosity at 25°C of 1000 mPa·s or less;
an epoxy resin (B) having at least two epoxy groups that is other than the epoxy resin (A);
a core-shell rubber particle (C); and
an amine curing agent (D),
wherein a content of the epoxy resin (A) is in a range of 0.5 to 15 mass% relative to a total mass of the epoxy resin (A), the epoxy resin (B), the core-shell rubber particle (C), and the amine curing agent (D), and
a content of the core-shell rubber particle (C) is in a range of 1 to 10 mass% relative to the total mass of the epoxy resin (A), the epoxy resin (B), the core-shell rubber particle (C), and the amine curing agent (D).

2. The epoxy resin composition according to Claim 1, wherein the epoxy resin (B) contains one or more epoxy resins selected from the group consisting of bisphenol epoxy resins, phenol novolac epoxy resins, dicyclopentadiene epoxy resins, CTBN-modified epoxy resins, naphthalene epoxy resins, oxazolidone epoxy resins, and triphenolmethane epoxy resins.

3. The epoxy resin composition according to Claim 1 or 2, wherein a mass ratio [(A)/(B)] of the epoxy resin (A) to the epoxy resin (B) is in a range of 0.01 to 0.3.

4. The epoxy resin composition according to any one of Claims 1 to 3, wherein the epoxy resin (B) contains a dicyclopentadiene epoxy resin as an essential component, and the dicyclopentadiene epoxy resin has an average functionality in a range of 2.3 to 3.6.

5. The epoxy resin composition according to any one of Claims 1 to 4, wherein the core-shell rubber particle (C) has a volume-average particle size of 50 to 500 nm.

6. The epoxy resin composition according to any one of Claims 1 to 5, wherein the epoxy resin (A) has a linear aliphatic structure with 2 to 6 carbon atoms, and a hydrolyzable chlorine content in the epoxy resin (A) is in a range of 30 to 1500 ppm.

7. The epoxy resin composition according to any one of Claims 1 to 6, wherein an active hydrogen equivalent ratio of the amine curing agent (D) is in a range of 0.25 to 0.7 relative to a total epoxy equivalent of the epoxy resin (A) and the epoxy resin (B).

8. The epoxy resin composition according to any one of Claims 1 to 7, wherein the amine curing agent (D) is dicyandiamide, and the epoxy resin composition further contains a urea compound as a curing accelerator.

9. The epoxy resin composition according to any one of Claims 1 to 8, having a fracture toughness of 1.3 or more, a glass transition temperature of 120°C or higher, and a tensile elastic modulus of 2 GPa or more.

10. An epoxy resin composition for a fiber-reinforced composite material, wherein the epoxy resin composition according to any one of Claims 1 to 9 is used for a fiber-reinforced composite material.

11. An epoxy resin composition for a tow prepreg, wherein the epoxy resin composition according to any one of Claims 1 to 9 is used for a tow prepreg.

12. A cured product comprising a curing reaction product of the epoxy resin composition according to any one of Claims 1 to 9.

13. A fiber-reinforced composite material comprising the epoxy resin composition according to any one of Claims 1 to 9 and a reinforcing fiber.

14. A prepreg comprising the fiber-reinforced composite material according to Claim 13.

15. A tow prepreg comprising the fiber-reinforced composite material according to Claim 13.
